(19) Europäisches Patentamt
European Patent Office
Office européen des brevets

(11) **EP 3 218 322 B1**

(12) **EUROPÄISCHE PATENTSCHRIFT**

(45) Veröffentlichungstag und Bekanntmachung des Hinweises auf die Patenterteilung:
**28.10.2020 Patentblatt 2020/44**

(21) Anmeldenummer: **15798356.0**

(22) Anmeldetag: **12.11.2015**

(51) Int Cl.:
*C04B 28/04* (2006.01)    *C04B 5/00* (2006.01)
*C04B 18/14* (2006.01)    *C04B 111/00* (2006.01)

(86) Internationale Anmeldenummer:
**PCT/EP2015/076385**

(87) Internationale Veröffentlichungsnummer:
**WO 2016/075213 (19.05.2016 Gazette 2016/20)**

(54) **BAUSTOFF ZUR ABSCHIRMUNG ELEKTROMAGNETISCHER WELLEN, VERFAHREN ZU SEINER HERSTELLUNG SOWIE DESSEN VERWENDUNG**

BUILDING MATERIAL FOR SHIELDING AGAINST ELECTROMAGNETIC WAVES, METHOD FOR PRODUCING THE SAME AND USE THEREOF

MATÉRIAU DE BLINDAGE CONTRE LES ONDES ÉLECTROMAGNÉTIQUES, SON PROCÉDÉ DE FABRICATION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2014 DE 102014017049**

(43) Veröffentlichungstag der Anmeldung:
**20.09.2017 Patentblatt 2017/38**

(73) Patentinhaber: **CE-SYS Products GmbH**
**98693 Ilmenau (DE)**

(72) Erfinder:
• **NOACK, Bernd**
**07318 Saalfeld (DE)**
• **HALBEDEL, Bernd**
**98693 Ilmenau (DE)**
• **SCHADEWALD, Uwe**
**98693 Ilmenau (DE)**
• **NASS, Michael**
**98693 Martinroda (DE)**
• **RICKOWSKI, Bernd**
**07318 Saalfeld (DE)**
• **TÄUBER, Andreas**
**97723 Oberthulba (DE)**

(74) Vertreter: **Engel, Christoph Klaus**
**PATENTSCHUTZengel**
**Marktplatz 6**
**98527 Suhl (DE)**

(56) Entgegenhaltungen:
DE-A1- 19 800 868       JP-A- S61 238 901
JP-A- 2006 222 105      KR-B1- 930 009 342

Bemerkungen:
Die Akte enthält technische Angaben, die nach dem Eingang der Anmeldung eingereicht wurden und die nicht in dieser Patentschrift enthalten sind.

## Beschreibung

Die vorliegende Erfindung betrifft einen Baustoff zur Abschirmung elektromagnetischer Wellen durch überwiegende Absorption der elektromagnetischen Wellen, wobei der Baustoff eisenoxidhaltige Zuschlagstoffe und mineralische Bindemittel enthält. Die Zuschlagstoffe basieren bevorzugt auf eisenoxidhaltigen Abfallprodukten der Stahlindustrie und modifizierten Ferriten. Der Baustoff dient in verschiedensten Anwendungen zur Absorption von hochfrequenten elektromagnetischen Wellen. Die Erfindung betrifft weiterhin ein Verfahren zur Herstellung eines solchen Baustoffs sowie zu dessen Verwendung, insbesondere zum Beschichten von Gebäudeteilen.

Die Umwelt, private und industrielle Bereiche sind durch elektromagnetische Wellen beeinflusst. Diese entstehen in der Kommunikationstechnik und durch Funkübertragungssysteme. Der ständig zunehmende Informationsaustausch mit hoher Taktfrequenz und Übertragungsrate führt zu hochfrequenten elektrischen und magnetischen Feldern. Dadurch beeinflussen sich zunehmend elektronische Systeme mit hohen Datenübertragungsraten und bewirken Fehlfunktionen.

Nicht eindeutig geklärt ist die Beeinflussung von lebenden Organismen durch hochfrequente elektromagnetische Wellen. Um einerseits das Risiko für Menschen und Tiere einzuengen und auf der anderen Seite eine sichere Funktion von elektronischen Systemen zu gewährleisten, wurden in vielen Industrieländern einzuhaltende Grenzwerte für eine maximale Leistungsdichte von Strahlungsquellen gesetzlich festgelegt und neuartige HF-Materialen entwickelt.

Zudem ist im industriellen Bereich, im Flugverkehr, bei speziellen medizinischen Anwendungen, der vertraulichen Datenverarbeitung usw. der Schutz vor unkontrollierten und undefinierten elektromagnetischen Wellen vielfach zwingend erforderlich. Ebenso ist die Hochfrequenzabschirmung von Räumen wegen der zunehmenden Belastung durch elektromagnetische Wellen und der immer wichtiger werdenden Betriebs- und Datensicherheit elektronischer Systeme in zunehmendem Maße notwendig.

Aus dem Stand der Technik sind bereits Baustoffe bekannt, die durch unterschiedliche Modifizierungen eine erhöhte Abschirmung von elektromagnetischen Wellen aufweisen. So wird zum Beispiel einem Kalksandstein Magnetit in der Größenordnung von 50 % zugemischt, um eine Abschirmwirkung zu erreichen. Eine weitere Produktvariante ist die sogenannte JUWÖ-Platte, die in dem Profil eines Hohllochziegels Einlagerungen von Aluminiumstreifen, die gegeneinander versetzt angeordnet sind, aufweist. Weiterhin ist bekannt, Kupfergewebe mit einer Maschenweite von 0,46 mm x 0,46 mm auf eine Wandoberfläche aufzubringen und durch Putz oder Farbschichten einzubinden. Allerdings bewirken die metallischen Anteile in diesen Baustoffen überwiegend nur eine Reflexion der elektromagnetischen Wellen, sodass die Feldstärken nahezu unverändert bleiben oder sich durch Interferenzen sogar erhöhen.

Der ebenfalls bekannte Carbonfaserabschirmputz enthält zum Erreichen einer Abschirmung Carbonfasern und weist bei Schichtdicken von 1,5 cm eine Abschirmwirkung von 99,5 % auf, die jedoch größtenteils auch auf Reflexion zurückzuführen ist. Die Schutzplatte La Vita ist eine Gipskartonplatte, die sich von üblichen Ausführungen durch eine leitfähige Rückseitenbeschichtung unterscheidet. Sie wird mit einer Abschirmwirkung von 92 % ausgewiesen, die ebenfalls im Wesentlichen auf Reflexion der elektromagnetischen Wellen beruht. Die Abschirmwirkung von Kupferblech und anderen massiven Metallschichten ist vergleichsweise gut. Allerdings werden auch hier die elektromagnetischen Wellen von diesen Flächen fast vollständig reflektiert. Außerdem sind Kosten und Aufwand für solche Abschirmlösungen, insbesondere bei steigenden Rohstoffpreisen, kaum noch vertretbar.

Die folgende Übersicht zeigt die Abschirmwirkungen verschiedener Materialien bei diskreten Frequenzen [Prof. Peter Pauli: Schirmung elektromagnetischer Wellen im persönlichen Umfeld. Bericht des Bayerischen Landesamtes für Umwelt (LfU), 2008]:

| Frequenz GHz | 0,5 | 1,5 | 2,5 | 3,0 |
|---|---|---|---|---|
| Produkt | | | | |
| **KS-Stein 11,5 cm** | | | | |
| Schirmdämpfung [dB] | 14 | 32 | 50 | 55 |
| Schirmwirkungsgrad [%] | 94 | 99,3 | 99,999 | 99,9999 |
| **JUWÖ Platte 36,5 cm** | | | | |
| Schirmdämpfung [dB] | 17 | 22 | 20 | 15 |
| Schirmwirkungsgrad [%] | 97 | 99,2 | 99,0 | 92 |
| **HF-Kupfergew.0,46x0,46** | | | | |
| Schirmdämpfung [dB] | 55 | 56 | 54 | 52 |
| Schirmwirkungsgrad [%] | 99.999 | 99,999 | 99,999 | 99,999 |
| **Carbonfaserabschirmputz 1,5 cm** | | | | |
| Schirmdämpfung [dB] | 25 | 25 | 26 | 26 |
| Schirmwirkungsgrad [%] | 99,5 | 99,5 | 99,6 | 99,6 |

(fortgesetzt)

| Schutzmatte LaVita | | | | |
|---|---|---|---|---|
| Schirmdämpfung [dB] | 12 | 13 | 13 | 13 |
| Schirmwirkungsgrad [%] | 92 | 93 | 93 | 93 |
| **Kupferblech** | | | | |
| Schirmdämpfung [dB] | 55 | 60 | 60 | 60 |
| Schirmwirkungsgrad [%] | 99,999 | 99,9999 | 99,9999 | 99,9999 |

In der DE 10 2008 056469 B4 wird die Verwendung und Herstellung von Baustoffmischungen zur Herstellung abgeschirmter Bauwerke beschrieben. Es wird vorgeschlagen, den üblichen Bestandteilen einer Baustoffmischung elektrisch leitfähige Komponenten in Form von eisenhaltigem Feinstaub aus der Stahlherstellung, in Stücke geschnittenem Leiterplattenschrott und Räumasche aus der Zinkherstellung hinzuzugeben, sodass sich gegenüber dem Normalbeton im Frequenzbereich (0,7 - 5) GHz Verbesserungen der Schirmdämpfung ergeben. Diese Vergrößerungen der Schirmdämpfung beruhen auf einer Reflexion der auftreffenden elektromagnetischen Wellen, weil die zugegebenen Komponenten metallisch und demzufolge sehr gut elektrisch leitfähig sind. Aus diesem Grunde ist auch anzunehmen, dass die elektromagnetischen Wellen in dem angestrebten Frequenzbereich nicht sehr tief in die Gebäudeteile eindringen können und somit nur sehr dünne Schichten sinnvoll sind (Eindringtiefe in Eisen bei 1 GHz: ca. 0,0002 mm). Zudem ist die Langzeitwirkung der Schirmdämpfung nicht gegeben, da die zugegebenen metallischen Komponenten in der Baustoffmischung durch die geringe Baustoffüberdeckung korrodieren können.

Die zuvor aufgeführten, derzeit für Räume oder Gebäude vorgeschlagenen bzw. angewendeten Abschirmsysteme erreichen ihre Schirmdämpfungen nur durch eine Reflektion der auftreffenden elektromagnetischen Wellen. Eine Absorption der elektromagnetischen Wellen innerhalb von elektrisch gut leitfähigen Abschirmsystemen wird nur in geringem Umfang gewährleistet und ist sogar auf einen typischen Frequenzbereich von kleiner 1 GHz begrenzt. Das hat zur Folge, dass im Umfeld eine zusätzliche elektromagnetische Belastung und Störemission durch reflektierte Wellen und aus durch Mehrfachreflexionen resultierenden Inferenzen auftritt - insbesondere im Frequenzbereich oberhalb von 1 GHz. Zudem müssen bei reinen metallischen Abschirmungen von Räumen, Anlagen und Geräten aus Sicherheitsgründen von ausgewiesenem Fachpersonal ein Potentialausgleich durch Erdung und/oder ein Berührungsschutz realisiert werden.

In JP 2001-352194 A wird ein weiteres Verfahren zur Herstellung von Material zur Schirmdämpfung von ionisierender und elektromagnetischer Strahlung vorgestellt. Dazu wird flüssige Elektroofenschlacke bei 1500°C in einen zusätzlichen Schmelzer überführt, in welchem bei 1350°C unter Zugabe von Zuschlagstoffen, die Mg, Cr, Mn, Fe, Co, Cu, Zn, Ba enthalten, und Einblasen von Sauerstoff eine Oxidation der Schmelze erfolgt, um aus vorhandenen Eisenverbindungen als Hauptphase Spinell-Ferrite zu erhalten. Die Schmelze wird danach schnellgekühlt und zerkleinert. Die thermische Behandlung der Elektroofenschlacke dient zur Steigerung ihrer Permeabilität, der Strahlungsschirmung und der Dämpfung von elektromagnetischer Strahlung. Allerdings werden die hohen Prozesstemperaturen sowie die Notwendigkeit eines zusätzlichen Schmelzers sich sehr nachteilig auf den Produktpreis auswirken.

Die JP 2006 222105 A zeigt die Herstellung ferritischer Materialien aus Elektroofenschlacke, Kupferschlacke oder Stäuben aus dem Elektroofenprozess. Aus der Elektroofenschlacke usw. wird ein Granulat mit einer Größe um 2,5 mm hergestellt, welches nachfolgend in sauerstoffreicher Atmosphäre erhitzt, gerührt und einer Schnellkühlung unterzogen wird. Hierdurch werden die $Fe_2O_3$- und $Fe_3O_4$-Anteile erhöht. Die so gewonnenen Stoffe können als Zusatz in Kunststoffen, Gummi, Beton, Keramik u. ä. eingebracht werden, um Materialien zur elektromagnetischen Erwärmung oder elektromagnetischen Abschirmung zu erhalten. Auch hier ist das Herstellungsverfahren direkt an den Stahlwerksprozess gekoppelt, was entsprechende Investitionen im Stahlwerk voraussetzt.

Aus der CN 101525224 A ist die Herstellung von Absorbermaterial für die Bauindustrie bekannt, bei dem hocheisenhaltige Flugasche und/oder in Wasser oder Luft schnellgekühlte Stahlwerksschlacke als Zuschlagstoffe für Zement genutzt werden. Insbesondere werden Aschen und Schlacken mit hohem Anteil an $Fe_2O_3$ verwendet (>25%). Diese Materialien werden nicht weiter modifiziert, sondern zunächst (60-70) Teile Zement und (3-40) Teile Schlacke trocken und nach Zugabe von (30-40) Teilen Wasser weiter nass gemischt und anschließend daraus Platten von (180x180x20) mm$^3$ für den Einsatz in Gebäuden gegossen. Die ausgewiesenen Dämpfungsmessungen zeigen allerdings, dass die Materialien nur in einem sehr hohen Frequenzbereich (2-18) GHz und hier auch nicht breitbandig konstant abschirmen.

Die AT 004 618 U1 beschreibt ein Verfahren zur Herstellung eines Baustoffes auf der Basis von Walzzunder, Gichtstaub und deren Schlämmen sowie anderen metalloxid-/ metallhaltigen Stäuben, Schlämmen und Grußen o. ä. Abfallstoffen der metallverarbeitenden Industrie, die aufgrund strenger werdenden Umweltauflagen nur mit hohen Kosten deponiert werden können. Ein Gemisch aus Walzzunder, Lehm und Gerüstsilikat wird in Formen eingebracht und bei mindestens 800°C gebrannt. Der Brand des gesamten Baustoffgemisches dient der thermischen Behandlung zur Verfestigung der daraus hergestellten Formkörper dar. Das thermodynamische Gleichgewicht dieser Komponente wird durch den Brand nicht verändert.

Aufgabe der vorliegenden Erfindung ist es deshalb, die aufgezeigten Nachteile des Standes der Technik zu überwinden und einen Baustoff sowie ein Verfahren zu dessen Herstellung bereitzustellen, mit dem die Abschirmung bzw. elektromagnetische Dämpfung der elektromagnetischen Wellen hauptsächlich reflexionsarm durch Absorption über einen weiten Frequenzbereich realisiert werden kann. Dabei soll der neue Baustoff auf Gebäudeteile, wie Wände, Decken und Böden, auftragbar und langzeitstabil sein, die bauphysikalischen und ökologischen Eigenschaften (Festigkeit, Permeabilität, Dämmung, Schadstoffbelastung) nicht nachteilig beeinträchtigen sowie unproblematisch und preisgünstig herzustellen sein.

Erfindungsgemäß gelingt die Lösung dieser Aufgabe mit einem Baustoff gemäß Anspruch 1, einem Verfahren gemäß Anspruch 7 und einer Verwendung des Baustoffs gemäß Anspruch 10. Vorteilhafte Ausgestaltungen der erfindungsgemäßen Lösung sind in den Unteransprüchen angegeben.

Die Erfindung beruht zunächst auf der Erkenntnis, dass zur Verbesserung elektromagnetischer Abschirmung vor allem das Absorptionsverhalten des einzusetzenden Baustoffs gesteigert werden muss. Es wurde herausgefunden, dass dies erfindungsgemäß gelingt, indem in Abfallstoffen der metallurgischen Industrie die Anteile an FeO und $Fe_2O_3$ minimiert werden und dafür die $Fe_3O_4$ Anteile erhöht werden. Dazu wird eine Möglichkeit angegeben, diese Materialveränderungen unter oxidierenden Bedingungen zu erhalten, sodass die Prozesse einfach und preiswert gestaltet sind. Die erforderlichen chemischen Reduzierungen finden innerhalb des Stoffsystems statt.

Der erfindungsgemäße Baustoff enthält eisenoxidhaltige Zuschlagstoffe und mineralische Bindemittel. Die eisenoxidhaltigen Zuschlagstoffe sind durch Elektroofenschlacke (EOS) gebildet, die vor ihrer Vermischung mit dem Bindemittel thermisch behandelt (modifiziert) ist, indem aus dem Elektroofen abgezogene Elektroofenschlacke abgekühlt wird und nachfolgend erneut erwärmt wird, nämlich im Temperaturbereich zwischen 200°C und 700°C, für einen vorgegebenen Zeitraum und unter oxidierenden Bedingungen (in Luft).

Gemäß einer bevorzugten Ausführungsform weist die thermisch modifizierte Elektroofenschlacke eine Kornfraktion mit einem Partikelgrößenbereich von 0 bis 8 mm und eine Kornfraktion mit einem Partikelgrößenbereich von 0 bis 0,125 mm auf.

Das Verfahren gemäß der vorliegenden Erfindung setzt auf dem in der metallurgischen Industrie ablaufenden Standardprozess auf, bei welchem die Abfallprodukte zunächst unter oxidierenden Bedingungen abkühlen. Daran schließen sich Zerkleinerung, Sieben und Aufteilen in Fraktionen an. Wesentlich ist die nachfolgende thermische Behandlung der Fraktionen unter oxidierenden Bedingungen.

Während die anfängliche Abkühlung von EOS aus den gewöhnlichen Abläufen der Stahlindustrie bekannt ist, erreicht die Erfindung durch die erneute thermische Behandlung unter oxidierenden Bedingungen überraschenderweise eine deutliche Erhöhung des Anteils von $Fe_3O_4$ in dem Zuschlagstoff, worauf nachfolgend die stark absorbierenden Eigenschaften des erfindungsgemäßen Baustoffs beruhen.

Insbesondere wird durch die erfindungsgemäße thermische Behandlung der Elektroofenschlacke erreicht, dass ferritische Verbindungen entstehen, die Schlacke teilweise in Korngrößen unter 8 mm zerfällt und freie basische Bestandteile gebunden werden. Die damit erreichbare elektromagnetische Abschirmung hat eine völlig neue Qualität gegenüber den bisher bekannten Baumaterialien, deren abschirmendes Verhalten vor allem auf der Reflexion der elektromagnetischen Wellen beruht.

Das erfindungsgemäße Verfahren umfasst dazu folgende Schritte: Zunächst erfolgt das Abkühlen eines eisenoxidhaltigen Abfallproduktes, nämlich von aus einem Elektroofen abgezogener Elektroofenschlacke. Es folgt ein erneutes Erwärmen des Abfallproduktes in Luft für eine vorbestimmte Zeit auf eine vorgegebene Temperatur, die für Elektroofenschlacke 200-700°C beträgt. Schließlich werden das thermisch behandelte Abfallprodukt und mineralische Bindemittel zu einem homogenen Gemisch vermischt, welches als Baustoff bereitgestellt wird.

Gemäß einer zweckmäßigen Ausführung werden aus der abgekühlten Elektroofenschlacke Kornfraktionen mit einem Partikelgrößenbereich von 0 bis 4 mm und 0 bis 8 mm durch Klassierung abgetrennt, und durch Feinzerkleinerung wird eine Kornfraktion mit einem Partikelgrößenbereich von 0 bis 0,125 mm hergestellt.

Eine vorteilhafte Ausführungsform zeichnet sich dadurch aus, dass Titan dotierte Bariumhexaferrit, Eisenoxid und/oder Metallfasern mit der aufbereiteten Elektroofenschlacke und den mineralischen Bindemitteln gemischt werden.

Bevorzugt wird das Titan dotierte Bariumhexaferritpulver mit einer Glaskristallisationstechnik synthetisiert, wobei das Titan in Form von $TiO_2$ als Teil des erforderlichen $Fe_2O_3$ in das Rohstoffgemenge gegeben wird. Das Rohstoffgemenge wird bei Temperaturen zwischen 1250°C und 1350°C geschmolzen, anschließend schnellgekühlt, bei Temperaturen bis zu 840 °C getempert, und abschließend wird die glasige Matrix weggelöst. Dieser Zuschlagstoff wird granulometrisch aufbereitet, und anschließend werden die mineralischen und/oder organischen Bindemittel, die Metallfasern und/oder die Additive hinzugefügt.

Der erfindungsgemäße Baustoff kann bevorzugt für Putzschichten oder Montageplatten zur elektromagnetischen Abschirmung von Gebäuden oder Gebäudeteilen verwendet werden. Die Verwendung dieses Baustoffes führt zu einer elektromagnetischen Abschirmung durch überwiegende Absorption.

Erfindungsgemäß werden dispersen, elektromagnetisch absorbierenden eisenoxidhaltigen Zuschlagstoffen aus Abfällen der Stahlindustrie, die zusätzlich modifiziert oder synthetisiert sind, geeignete Bindemittel und Additive zugesetzt, sodass eine Baustoffmischung entsteht, die mit in der Baustoffindustrie üblichen Mischtechniken hergestellt und mittels angepassten Auftragstechniken auf Gebäudeteile aufgebracht werden können. Ebenso können daraus ganze Montageplatten hergestellt und ausgehärtet werden.

Dabei bewirkt die Materialmodifizierung der Zuschlagstoffe eine Erhöhung der verlustbestimmenden $Fe^{2+}/Fe^{3+}$-Anteile enthaltene Phasen. Durch eine entsprechende thermische Behandlung von eisenoxidhaltigen Ausgangstoffen und die Substitution von $Fe^{2+}/Fe^{3+}$-Anteilen durch $Ti^{4+}$ in hexaferritischen Ausgangsstoffen sowie eine granulometrische Anpassung der Ausgangsstoffe durch Siebung und/oder Zerkleinerung und/oder Agglomeration und/oder gesteuertes Kristallwachstum können erfindungsgemäß die Zuschlagstoffe an bestimmte Anwendungen angepasst werden.

Als Bindemittel wird vorrangig Zement eingesetzt. Zement reagiert mit Wasser unter Bildung unlöslicher, stabiler Verbindungen. Diese Verbindungen, die Calciumsilikathydrate, bilden feine nadelförmige Kristalle aus, welche sich untereinander verzahnen und so schnell ein Gerüst bilden, das die elektromagnetisch absorbierenden Zuschlagstoffe enthält und somit zu hohen Festigkeiten analog eines Zementmörtels oder Betons führen.

Um die Verarbeitbarkeit der erfindungsgemäßen Baustoffmischungen mit sehr hohen Rohdichten zu ermöglichen, werden Additive zugesetzt, um ein ideales Benetzungsverhalten, eine schnelle Redispergierbarkeit und somit eine ausgezeichnete Rheologie zu erreichen und in der nassen Mörtel- bzw. Betonmischung eine Netzwerkstruktur zwischen den anorganischen Bestandteilen aufzubauen, die das Abrutschen des Produktes von der Wand beim Verarbeiten verhindert. Solche Baustoffmischungen sind in unterschiedlichen Schichtstärken auf Gebäudeteilen auftragbar und bei Temperaturen von 5 -30°C verarbeitbar.

Ausgangsstoffe der erfindungsgemäßen Zuschlagstoffe sind Materialien verschiedener Herkunft und unterschiedlicher Eigenschaften (Dichte, Partikelgröße, chemische Zusammensetzung, elektromagnetische Eigenschaften). Je nach Anwendungsanforderungen werden zum einen verfügbare eisenoxidhaltige Abfallstoffe (Schlacken, Stäube), natürliche und technische Eisenoxide/ Ferrite, die durch Siebung und oder Zerkleinerung und/oder Agglomeration und thermische Behandlung der Baustoffmischung und der Anwendung angepasst werden und zum anderen auf neue, mit der Glaskristallisation maßgeschneidert synthetisierte Ti-dotierte Bariumhexaferrite verwendet.

Weitere Einzelheiten und Vorteile der Erfindung sind dem nachfolgenden Beschreibungsteil zu entnehmen, in dem die Erfindung unter Bezugnahme auf die beigefügten Zeichnungen näher erläutert wird. Es zeigen:

Fig. 1:  XRD - Diagramme von Elektroofenschlacke (EOS) < 125 μm a) unbehandelter Zustand b) nach einstündiger thermische Behandlung bei 600°C in Luft;

Fig. 2:  Erwärmungskurven ϑ(t) von Materialproben der unbehandelten (a) und thermisch behandelten (b) Elektroofenschlacke;

Fig. 3:  XRD-Diagramm des submikroskaligen, phasenreinen Bariumhexaferritpulvers nach dem Löseprozess;

Fig. 4:  Erwärmungskurve ϑ(t) eines über die Glaskristallisationstechnik hergestellten zweiphasigen Pulvers;

Fig. 5:  Transmission free Space Methode zur Ermittlung der Schirmdämpfung von Prüfplatten im Frequenzbereich 1 bis 10 GHz;

Fig. 6:  Typischer Dämpfungsverlauf einer Prüfplatte (500x500x40) $mm^3$ im Frequenzbereich 1 bis 10 GHz, die aus einer Baustoffmischung besteht, die nur Elektroofenschlacke enthält;

Fig. 7:  Typischer Dämpfungsverlauf einer Prüfplatte (500x500x40) $mm^3$ im Frequenzbereich 1 bis 10 GHz, die aus einer Baustoffmischung besteht, die Elektroofenschlacke und Stahlfasern enthält;

Fig. 8:  Typische Dämpfungsverläufe von Prüfplatten (500x500x40) $mm^3$ im Frequenzbereich 1 bis 10 GHz, die aus Baustoffmischungen bestehen, die nur unbehandelte Elektroofenschlacke oder thermisch modifizierte Elektroofenschlacke enthalten;

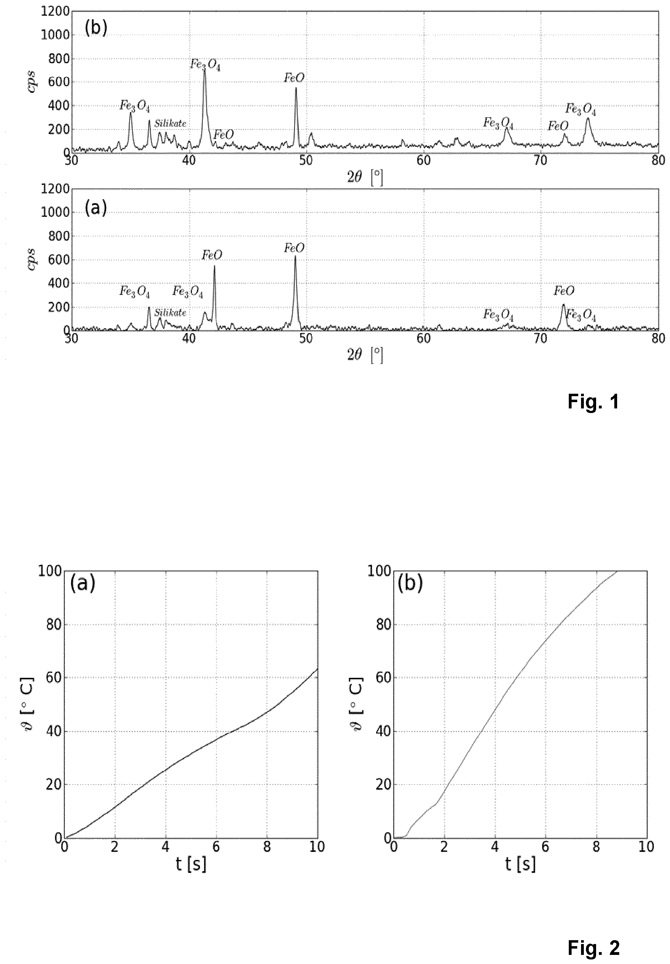

Die Änderung der Phasenzusammensetzung von Elektroofenschlacke (EOS) < 125 μm durch einstündige thermische Behandlung bei 620°C in Luft zeigen die XRD-Diagramme in Fig. 1. Erkennbar ist die Zunahme der $Fe_3O_4$-Phase, während die FeO-Phase deutlich abnimmt.

Die in Fig. 2 dargestellten Erwärmungskurven von Materialproben der unbehandelten (a) und thermisch behandelten (b) EOS-Schlacke in einem Mikrowellenherd belegen die deutlich größere absorbierte elektromagnetische Energie.

Der mögliche Temperaturbereich für die thermische Behandlung von EOS-Schlacke ist abhängig von der Zusammensetzung, Partikelgröße und Verweildauer und beträgt 200-700°C.

Das Ti-dotierte Bariumhexaferritpulver wird in einer röntgenamorphen, bariumborathaltigen Glasmatrix, die durch Schmelzen bei Temperaturen zwischen 1250°C und 1350°C des Rohstoffgemenges der Zusammensetzung (Mol-%)

$$40\ BaO + (27\text{-}X)\ Fe_2O_3 + X\ TiO_2 + 33\ B_2O_3$$

und anschließender Schnellkühlung durch gesteuerte Keimbildung und Kristallwachstum synthetisiert, und anschließend die glasige Matrix weggelöst. Wichtig ist, dass die Schmelze beim Abkühlen zunächst nicht kristallisiert. Für eine ausreichende Schnellkühlung wird eine rotierende Doppelwalze genutzt, in deren Spalt die Schmelze gequencht wird.

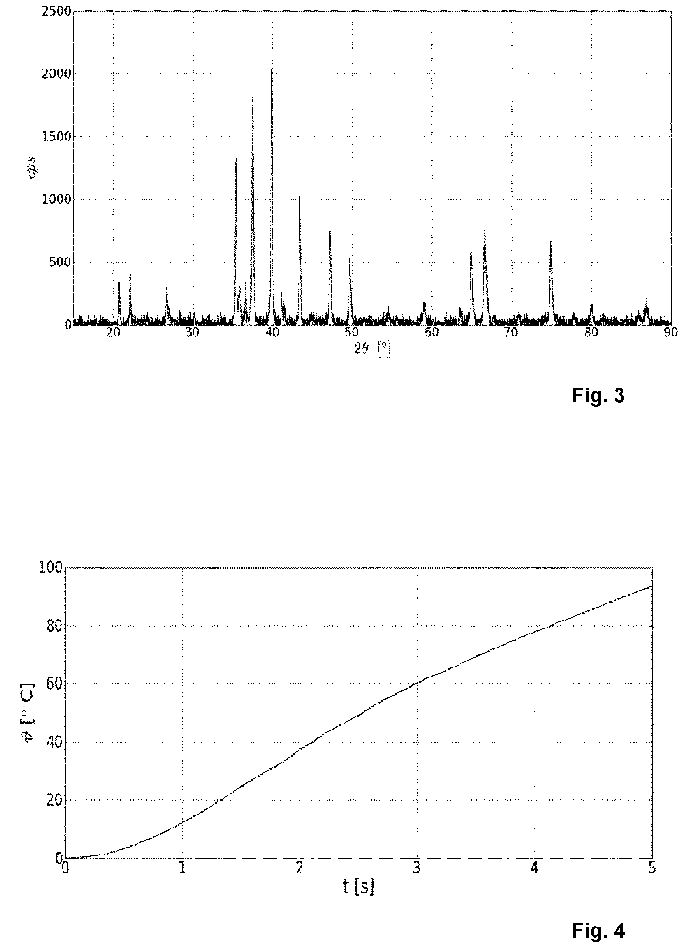

Das nach Kristallisation entstehende Pulver enthält in Abhängigkeit von der Schmelzdotierung X und den Kristallisationsbedingungen (Sauerstoffpartialdruck, Aufheizgeschwindigkeit, Temperaturtemperatur und Haltezeit) einen deutlich größeren Anteil submikroskaliger, monokristalliner, ferrimagnetischer, mit $Ti^{4+}$ dotierte Bariumhexaferritpartikel des Typs $BaFe_{12\text{-}x}Ti_xO_{19}$ und einen geringfügigen Anteil - max. bis zu 1 M-% submikroskaliger, monokristalliner, dielektrischer Bariumtitanate des Typs $BaTi_6O_{13}$. Das Röntgendiffraktogramm des submikroskaligen, phasenreinen Bariumhexaferritpulvers nach dem Löseprozess ist in Fig. 3 dargestellt.

Zum Einbau von $Ti^{4+}$-Ionen in den Bariumhexaferritkristallen ist es erforderlich, einen Anteil der in der Schmelze gebildeten $Fe^{2+}$-Ionen zu erhalten - max. bis zu 1 M-%. Dazu ist die röntgenamorphe Schmelze durch Temperung oberhalb der Transformationstemperatur und unterhalb der Aufschmelztemperatur in einer Atmosphäre, deren Sauerstoffpartialdruck mit einem Inertgas z.B. Stickstoff hinreichend abgemindert ist, zu behandeln. Den erforderlichen Anteil der dielektrischen Phase im Pulver erhält man, wenn die Schmelzdotierung X zwischen 5 und 10 Mol-% beträgt.

Die auf diese Weise synthetisierten Pulver oder Partikel verfügen über optimale elektromagnetische Absorptionseigenschaften, die aus der Überlagerung von 2 Absorptionseffekten infolge des Vorhandenseins einer dielektrischen und ferrimagnetischen Phase beruhen. Dies wird auch durch die Messung der Mikrowellenerwärmung bestätigt, die in Fig. 4 dargestellt ist.

Diese Pulver haben weiterhin als besonderen Vorteil eine hohe Korrosionsbeständigkeit in Lösungsmitteln, Laugen und schwachen Säuren. Bei starken organischen und anorganischen Säuren, wie Oxal-, Salz-, Schwefel- oder Flusssäure ist die Beständigkeit von der Temperatur, der Konzentration und der Angriffszeit abhängig.

Möglich ist es, andere Stoffsysteme wie z.B. $MeO\text{-}Fe_2O_3\text{-}TiO_2\text{-}B_2O_3$ oder $MeO\text{-}Fe_2O_3\text{-}TiO_2\text{-}SiO_2$ zu verwenden, wobei für Me vorzugsweise $Ba^{2+}$, $Sr^{2+}$ oder $Ca^{2+}$ steht. Dann müssen aber die Schmelzzusammensetzung und die Kristallisationsbedingungen entsprechend angepasst werden.

Zur Realisierung von Abschirmschichten für elektromagnetische Wellen in einem bestehenden Bauwerk können auf Wände, Decken und Böden geeignete Schichten aufgetragen werden. Erfindungsgemäß wird in der Putzschicht thermisch modifizierte Elektroofenschlacke als Zuschlagstoff eingesetzt. Diese Schlacke wird in zwei Phasen abgekühlt. In der ersten Phase erfolgt nach dem Abziehen aus dem Elektroofen eine Lagerung an der Luft bis zu einer Temperatur von 1000°C - 1200°C. Anschließend wird die Schlacke schockartig in einem Wasserbad abgekühlt. Dies ist von Vorteil, weil für die Abschirmung günstige ferritische Verbindungen entstehen, die Schlacke teilweise in Korngrößen unter 8 mm zerfällt und freie basische Bestandteile gebunden werden. Für die weitere Verarbeitung werden aus der Schlacke die Kornfraktionen 0-4,0 mm und 0-8,0 mm durch Klassierung abgetrennt. Außerdem erfolgt durch Feinzerkleinerung die Herstellung einer Kornfraktion 0-0,125 mm.

Mit diesen Zuschlagstoffen können vorteilhafte Baustoffmischungen hergestellt werden, die eine hohe Abschirmung bei weitgehender Absorption der elektromagnetischen Wellen bewirken und außerdem die für Putzschichten geforderten betontechnischen Kennwerte aufweisen. Diese Eigenschaften können erreicht werden, wenn die Baustoffmischung beispielhaft in nachstehender Zusammensetzung hergestellt wird:

| | |
|---|---|
| Elektroofenschlacke 0 - 8,0 mm | 48 M-% |
| Elektroofenschlacke 0 - 0,125 mm | 32 M-% |
| Zement CEM I 42,5 R (inklusive Zusatzstoffe/Additive) | 20 M-% |

Die Rezepturbestandteile werden mit Intensivmischern zu einem homogenen Gemisch verarbeitet und für die Spritzmörteltechnologie bereitgestellt. Für bestimmte Einsatzfälle ist die Zugabe von dotiertem Bariumhexaferrit und/oder feinkörnigem Eisenoxid bei entsprechender Reduzierung der Elektroofenschlacke sinnvoll.

Die Putzmörtelmischung wird bei einer Wasserzugabe von 130 ml/kg mit einer Putzmaschine im Dichtstromverfahren in einer Schichtdicke von 40 mm aufgetragen. Die Putztechnologie zeichnet sich dadurch aus, dass der Putzmörtel mit Zuschlagstoffen der Dichte von ca. 3,9 kg/dm$^3$ erst durch eine mechanische und magnetische Aktivierung gefördert werden kann. Nach der Aushärtung werden die folgenden bautechnischen Kennwerte erreicht:

| | |
|---|---|
| Prismendruckfestigkeit | 20 N/mm$^2$ |
| Biegezugfestigkeit | 4,5 N/mm$^2$ |
| Rohdichte | 2,6 kg/dm$^3$ |

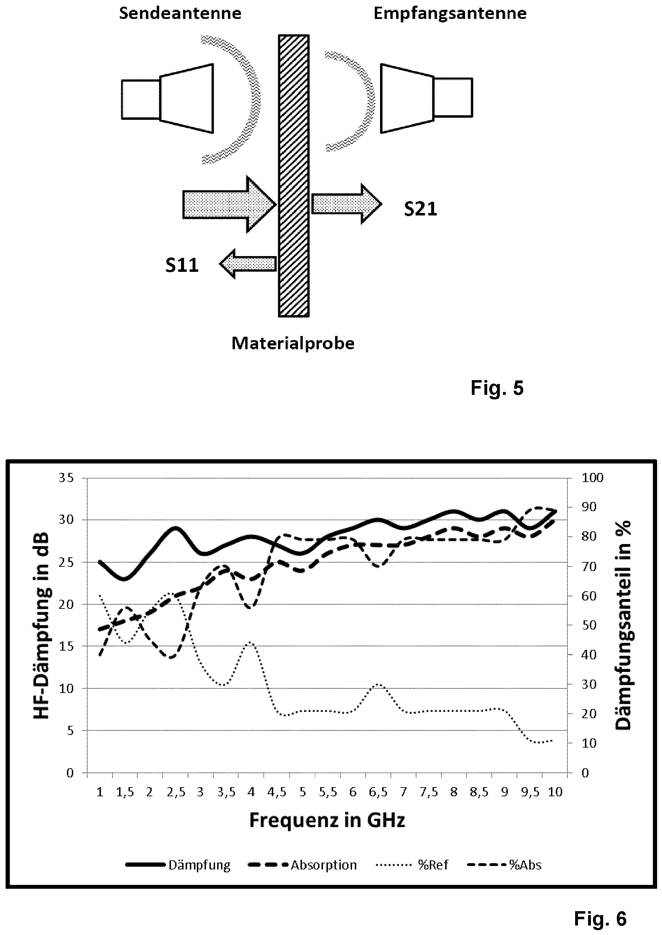

Die Bewertung der elektromagnetischen Abschirmwirkung erfolgt nach der "Transmission free Space" - Methode an Prüfplatten (500x500x40) mm$^3$ im Frequenzbereich 1 bis 10 GHz (Fig. 5). Dabei beaufschlagt eine Sendeantenne die Materialprobe mit einem ebenen elektromagnetischen Wellen. Ein Teil der eingestrahlten Leistung (P1) wird von der Probe reflektiert und als S11-Parameter gemessen. Ein Teil der eingestrahlten Leistung durchdringt die Probe und wird mit der Empfangsantenne als S21-Parameter gemessen (P2). Die Schirmwirkung der Probe ergibt sich aus:

$$a = 10 * log\left(\frac{P2}{P1}\right) \qquad (1)$$

In Fig. 6 ist der typische Dämpfungsverlauf einer Prüfplatte (500x500x40) mm$^3$ im Frequenzbereich 1 bis 10 GHz, die aus der oben angeführten Baustoffmischung, die nur thermisch modifizierte Elektroofenschlacke enthält, dargestellt. Die Schirmdämpfung wird zu ca. 85% im gesamten Frequenzbereich durch den absorbierenden Anteil der Elektroofenschlacke (EOS) bestimmt. Da die Verluste frequenzabhängig sind, ist ein kontinuierlicher Anstieg der Dämpfung festzustellen.

In einem weiteren Ausführungsbeispiel wurde der Baustoffmischung ein Anteil von Metallfasern aus ferritischen Stahl zugegeben:

| | |
|---|---|
| Elektroofenschlacke 0 - 8,0 mm | 48 M-% |
| Elektroofenschlacke 0 - 0,125 mm | 28 M-% |
| Metallfasern | 4 M-% |
| Zement CEM I 42,5 R (inkl. Zusatzstoffen/Additive) | 20 M-% |

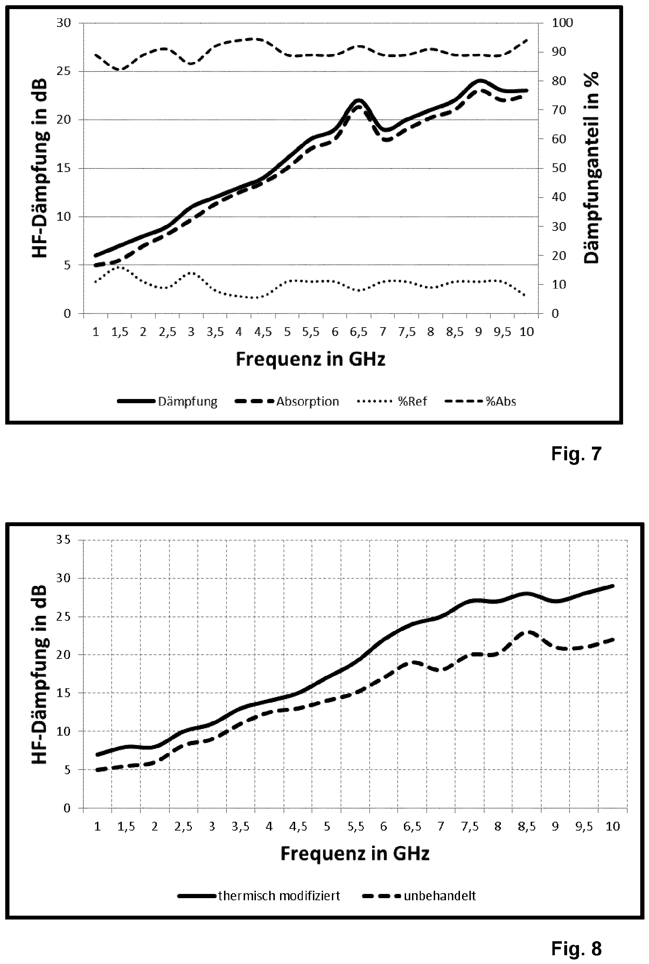

Fig. 7 zeigt einen typischen Dämpfungsverlauf einer Prüfplatte, die aus dieser Baustoffmischung, die Elektroofenschlacke und Stahlfasern enthält, hergestellt wurde. Mit steigender Frequenz nimmt der Anteil der absorbierenden Wirkung zu. Ab etwa 3 GHz werden ca. 90% der einfallenden Energie absorbiert. Die Schirmwirkung im unteren Frequenzbereich wird im Wesentlichen durch den reflektiven Anteil der Stahlfasern bestimmt.

Auch eine Oberflächenstrukturierung einer Baustoffplatte hat Einfluss auf den reflektierten Anteil der einfallenden Hochfrequenzwelle bzw. auf den resultierenden Einfallswinkel bei von 90° abweichender Einstrahlung. Sie hat einen merkbaren Anteil für Strukturtiefen größer als 1/10 der Wellenlänge. Bei 1 GHz müssen daher Tiefen von 30 mm verwendet werden. Bei 10 GHz reichen dafür schon 3 mm.

Fig. 8 zeigt einen typischen Dämpfungsverlauf für Prüfplatten, die aus Baustoffmischungen, die unbehandelte Elektroofenschlacke bzw. thermisch modifizierte Elektroofenschlacke enthalten, hergestellt wurden. Die thermische Modifizierung bewirkt über den gesamten Frequenzverlauf eine Steigerung der Dämpfung von bis zu 7 dB (ca. 30%) gegenüber der unbehandelten Elektroofenschlacke.

Aus bautechnischen Gründen kann es vorteilhaft sein, eine Abschirmschicht aus Montageplatten zu realisieren. Für die Herstellung dieser Platten werden Baustoffmischungen analog der Verwendung in Putzschichten verwendet. Diese Zuschlagstoffe werden beispielhaft in der nachstehenden Zusammensetzung dem Betonmischer zugeführt.

| | |
|---|---|
| Elektroofenschlacke 0 - 8,0 mm | 45 M-% |
| Elektroofenschlacke 0 - 0,125 mm | 30 M-% |
| Zement CEM I 42,5 R (inkl. Zuschlagstoffe/Additive) | 25 M-% |

Weitere Mischungsbestandteile, wie Eisenoxid, Bariumhexaferrit und Metallfasern können zugemischt werden.

In einer Steinfertigungsmaschine wird die mit Wasser versetzte Mischung zu Platten der Abmessung 400 mm x 400 mm x 40 mm gepresst und mittels einer Stapeleinheit zur Aushärtekammer transportiert. Nach dem Aushärten werden die Platten über eine Entstapelvorrichtung zur weiteren Verwendung bereitgestellt. Die betontechnischen Kennwerte der Platten sind nachstehend aufgeführt:

| | |
|---|---|
| Prismendruckfestigkeit | 30 N/mm$^2$ |
| Elastizitätsmodul | 20000 N/mm$^2$ |
| Trockenrohdichte | 2,8 kg /dm$^3$ |

Für Platten ohne Metallfasern können dabei folgende Effekte bei der Abschirmung von elektromagnetischen Wellen erzielt werden:

| | |
|---|---|
| Schirmwirkungsgrad bei 2,45 GHz | 95 % |
| Absorption | 85 % |

Metallfasern aus ferritischem und/ oder martensitischem Stahl erhöhen in Anhängigkeit von ihrem Masseanteil die Schirmdämpfungswirkung bei kleineren Frequenzen, führen aber zu einer Erhöhung des reflektiven Anteils.

Die erfindungsgemäßen Baustoffmischungen können vorrangig bei der Abschirmung von Mess- und Prüflaboren, für medizinische Anwendungen (MRT, EEG), für den Abhör- und Abstrahlschutz (Tempest nach BSI und NATO Vorgaben), für handyfreie Bereiche, für Zonen mit hohen Blitzschutzanforderungen, für den Schutz vor elektromagnetischen und nuklearen elektromagnetischen Puls und HPM sowie für militärische Bereiche Anwendung finden.

Vorteile gegenüber dem Stand der Technik bestehen insbesondere in der Möglichkeit Nachrüstungen von Abschirmmaßnahmen an bestehenden Gebäuden und Räumen ohne Beeinflussung des Raumklimas durch Abbindevorgänge vorzunehmen und eine Nutzungseinschränkung zu minimieren.

**Patentansprüche**

1.  Baustoff zur Abschirmung elektromagnetischer Wellen durch überwiegende Absorption der elektromagnetischen Wellen, wobei der Baustoff eisenoxidhaltige Zuschlagstoffe und mineralische Bindemittel enthält, **dadurch gekennzeichnet, dass** als Zuschlagstoff Elektroofenschlacke verwendet wird, welche vor ihrer Vermischung mit dem mineralischen Bindemittel wie folgt thermisch behandelt ist:

    - Abkühlung der aus einem Elektroofen abgezogenen Elektroofenschlacke in zwei Phasen, zunächst an der Luft auf 1000 °C bis 1200 °C und nachfolgend schockartig in einem Wasserbad;
    - erneutes Erwärmen der Elektroofenschlacke auf eine Temperatur zwischen 200°C und 700°C für einen vorgegebenen Zeitraum in Luft, sodass es zur Verringerung des FeO-Anteils und des $Fe_2O_3$ Anteils und zur Erhöhung des $Fe_3O_4$-Anteils in der Elektroofenschlacke kommt.

2.  Baustoff nach Anspruch 1, **dadurch gekennzeichnet, dass** die Elektroofenschlacke in Luft für eine Stunde auf 620°C erwärmt wurde.

3.  Baustoff nach einem der Ansprüche 1 bis 2, **dadurch gekennzeichnet, dass** die Zuschlagstoffe verschiedene Partikelgrößen aufweisen, wobei die Massenprozent-Anteile der jeweiligen Partikelgrößenbereiche in Abhängigkeit von der jeweiligen Verwendung des Baustoffes angepasst sind.

4.  Baustoff nach Anspruch 3, **dadurch gekennzeichnet, dass** die Elektroofenschlacke eine Kornfraktion mit einem Partikelgrößenbereich von 0 bis 8 mm und eine Kornfraktion mit einem Partikelgrößenbereich von 0 bis 0,125 mm aufweist.

5.  Baustoff nach einem der Ansprüche 1 bis 4, **dadurch gekennzeichnet, dass** er Metallfasern, Bariumhexaferrit und/oder Eisenoxid enthält.

6.  Baustoff nach einem der Ansprüche 1 bis 5, **dadurch gekennzeichnet, dass** er zur Erhöhung seines Benetzungsverhaltens Additive und Zusatzstoffe enthält.

7.  Verfahren zur Herstellung eines Baustoffs, umfassend folgende Schritte:

    - Abkühlen einer aus einem Elektroofen abgezogenen Elektroofenschlacke in zwei Phasen, zunächst an der Luft auf 1000 °C bis 1200 °C und nachfolgend schockartig in einem Wasserbad;

- Erneutes Erwärmen der Elektroofenschlacke auf eine Temperatur zwischen 200°C und 700°C für einen vorgegebenen Zeitraum in Luft, sodass es zur Verringerung des FeO-Anteils und zur Erhöhung des $Fe_3O_4$-Anteils in der Elektroofenschlacke kommt;
- Mischen der so thermisch behandelten Elektroofenschlacke mit einem mineralischen Bindemittel zu einem homogenen Gemisch, welches als Baustoff bereitgestellt wird.

8. Verfahren nach Anspruch 7, **dadurch gekennzeichnet, dass** aus der abgekühlten Elektroofenschlacke Kornfraktionen mit einem Partikelgrößenbereich von 0 bis 4 mm und 0 bis 8 mm durch Klassierung abgetrennt werden, und dass durch Feinzerkleinerung eine Kornfraktion mit einem Partikelgrößenbereich von 0 bis 0,125 mm hergestellt wird.

9. Verfahren nach Anspruch 7 oder 8, **dadurch gekennzeichnet, dass** Bariumhexaferrit, Eisenoxid und/oder Metallfasern mit der thermisch behandelten Elektroofenschlacke und den mineralischen Bindemitteln gemischt werden.

10. Verwendung eines Baustoffes nach einem der Ansprüche 1 bis 6 für Putzschichten oder Montageplatten zur elektromagnetischen Abschirmung von Gebäuden oder Gebäudeteilen durch überwiegende Absorption elektromagnetischer Wellen.

## Claims

1. Building material for shielding electromagnetic waves by predominantly absorbing the electromagnetic waves, wherein the building material contains ferrous-oxide-containing aggregates and mineral binders, **characterized in that** electro-furnace slag is used as an aggregate, which is thermally treated as follows prior to being mixed with the mineral binder:

   - cooling of the electro-furnace slag removed from an electro-furnace in two phases, initially, in the air at 1000°C to 1200°C and subsequently in an abrupt manner, in a water bath;
   - reheating the electro-furnace slag to a temperature between 200°C and 700°C for a specified period of time in the air, resulting in a reduction of the FeO and $Fe_2O_3$ content and an increase in the $Fe_3O_4$ content in the electro-furnace slag.

2. Building material according to Claim 1, **characterized in that** the electro-furnace slag in the air has been heated for one hour to 620°C.

3. Building material according to any one of Claims 1 to 2, **characterized in that** the aggregates comprise different particle sizes, wherein the mass percentage portions of the respective particle size ranges are adapted depending on the respective use of the building material.

4. Building material according to Claim 3, **characterized in that** the electro-furnace slag has a grain fraction with a particle size ranging from 0 to 8 mm and a grain fraction with a particle size ranging from 0 to 0.125 mm.

5. Building material according to any one of Claims 1 to 4, **characterized in that** it contains metal fibres, barium hexaferrite and/or iron oxide.

6. Building material according to any one of Claims 1 to 5, **characterized in that** it contains additives and admixtures to increase its wetting behaviour.

7. Method for the production of a building material, comprising the following steps:

   - cooling of an electro-furnace slag removed from an electro-furnace in two phases, initially in the air at 1000°C to 1200°C and, subsequently in an abrupt manner, in a water bath;
   - reheating the electro-furnace slag to a temperature between 200°C and 700°C for a specified period of time in the air, resulting in a reduction in the FeO content and an increase in the $Fe_3O_4$ content in the electro-furnace slag;
   - mixing the electro-furnace slag thermally treated in this manner with a mineral binder to form a homogeneous mixture, which is provided as a building material.

8. Method according to Claim 7, **characterized in that**, from the cooled electro-furnace slag, grain fractions with a particle size ranging from 0 to 4 mm and 0 to 8 mm are separated by way of classification, and that a grain fraction with a particle size ranging from 0 to 0.125 mm is produced by means of fine grinding.

**9.** Method according to Claim 7 or 8, **characterized in that** barium hexaferrite, iron oxide and/or metal fibres are mixed with the thermally treated electro-furnace slag and the mineral binders.

**10.** Use of a building material according to any one of Claims 1 to 6 for plaster layers or mounting plates for the electromagnetic shielding of buildings or parts of buildings by predominantly absorbing electromagnetic waves.

**Revendications**

**1.** Matériau de construction, destiné à assurer un blindage contre des ondes électromagnétiques par absorption majoritaire des ondes électromagnétiques, le matériau de construction contenant des granulats à teneur en oxyde de fer et des agents liants minéraux, **caractérisé en ce qu'on** utilise en tant que granulat des scories de four électrique, qui avant d'être mélangées avec l'agent liant minéral subissent le traitement thermique suivant :

- le refroidissement en deux phases des scories de four électrique soutirées dans le four électrique, d'abord à l'air à de 1000 °C à 1200 °C et ensuite par choc, dans un bain d'eau ;
- le réchauffement des scories de four électrique à une température comprise entre 200 °C et 700 °C sur une période prédéfinie à l'air, de sorte à provoquer la réduction de la part en FeO et de la part en $Fe_2O_3$ et l'augmentation de la part en $Fe_3O_4$ dans les scories de four électrique.

**2.** Matériau de construction selon la revendication 1, **caractérisé en ce qu'on** a chauffé les scories de four électrique à l'air, pendant une heure à 620 °C.

**3.** Matériau de construction selon l'une quelconque des revendications 1 et 2, **caractérisé en ce que** les granulats présentent plusieurs tailles des particules, les parts en pourcentage en masse des ordres respectifs de tailles de particules étant adaptées en fonction de l'utilisation respective du matériau de construction.

**4.** Matériau de construction selon la revendication 3, **caractérisé en ce que** les scories de four électrique présentent une fraction granulaire avec des tailles de particules de l'ordre de 0 à 8 mm et une fraction granulaire avec des tailles de particules de l'ordre de 0 à 0,125 mm.

**5.** Matériau de construction selon l'une quelconque des revendications 1 à 4, **caractérisé en ce qu'**il contient des fibres métalliques, de l'hexaferrite de baryum et/ou de l'oxyde de fer.

**6.** Matériau de construction selon l'une quelconque des revendications 1 à 5, **caractérisé en ce que** pour augmenter sa mouillabilité, il contient des additifs et des adjuvants.

**7.** Procédé, destiné à fabriquer un matériau de construction, comprenant les étapes suivantes consistant à :

- faire refroidir en deux phases des scories de four électrique soutirées dans un four électrique, d'abord à l'air, à de 1000 °C à 1200 °C et ensuite par choc, dans un bain d'eau ;
- faire réchauffer les scories de four électrique à une température comprise entre 200 °C et 700 °C sur une période prédéfinie à l'air, de sorte à provoquer la réduction de la part en FeO et l'augmentation de la part en $Fe_3O_4$ dans les scories de four électrique ;
- mélanger les scories de four électrique ayant subi un tel traitement thermique avec un agent liant minéral en un mélange homogène, que l'on met à disposition comme matériau de construction.

**8.** Procédé selon la revendication 7, **caractérisé en ce qu'on** sépare par classification des scories de four électrique refroidies des fractions granulaires avec des tailles de particules de l'ordre de 0 à 4 mm et de 0 à 8 mm et **en ce que** par broyage fin, on fabrique une fraction granulaire avec des tailles de particules de l'ordre de 0 à 0,125 mm.

**9.** Procédé selon la revendication 7 ou 8, **caractérisé en ce qu'on** mélange de l'hexaferrite de baryum, de l'oxyde de fer et/ou des fibres métalliques avec les scories de four électrique ayant subi un traitement thermique et les agents liants minéraux.

10. Utilisation d'un matériau de construction selon l'une quelconque des revendications 1 à 6 pour des couches d'enduit ou des panneaux de montage, destinés à assurer le blindage contre des ondes électromagnétiques de bâtiments ou de parties de bâtiments par absorption majoritaire d'ondes électromagnétiques.

**Fig. 1**

**Fig. 2**

**Fig. 3**

**Fig. 4**

Sendeantenne                    Empfangsantenne

S21

S11

Materialprobe

**Fig. 5**

**Fig. 6**

Fig. 7

Fig. 8

## IN DER BESCHREIBUNG AUFGEFÜHRTE DOKUMENTE

**In der Beschreibung aufgeführte Patentdokumente**

- DE 102008056469 B4
- JP 2001352194 A
- JP 2006222105 A
- CN 101525224 A
- AT 004618 U1

**In der Beschreibung aufgeführte Nicht-Patentliteratur**

- **PETER PAULI.** Schirmung elektromagnetischer Wellen im persönlichen Umfeld. *Bericht des Bayerischen Landesamtes für Umwelt (LfU),* 2008